Europäisches Patentamt

European Patent Office

Office européen des brevets

(11) Publication number: **0 085 796**
**A1**

## (12) EUROPEAN PATENT APPLICATION

(21) Application number: **82300563.2**

(22) Date of filing: **04.02.82**

(51) Int. Cl.³: **G 05 D 23/19**

(43) Date of publication of application:
**17.08.83 Bulletin 83/33**

(84) Designated Contracting States:
**AT BE CH DE FR IT LI LU NL SE**

(71) Applicant: **Rovert Electrics (Cheltenham) Limited
Alstone Lane Industrial Estate Alstone Lane
Cheltenham Gloucestershire(GB)**

(72) Inventor: **Gilbert, Peter Richard
25 Pittville Lawn
Cheltenham Gloucestershire(GB)**

(74) Representative: **Wynne-Jones, John Vaughan et al,
Wynne-Jones, Lainé & James 22, Rodney Road
Cheltenham Gloucestershire GL50 1JJ(GB)**

(54) **Remote control apparatus.**

(57) A control module 11 having a number of slots 40 for key tabs is located a hotel reception. The slots 40 correspond to rooms in the hotel and contain switches 19, a respective one of which is closed when a key tab is inserted in its appropriate slot. Closure of a switch 19 activates a solenoid valve 14 in the respective room shutting off the radiator 15 in that room. Thus whenever a room is vacated, the heating in the room is shut off. Other services, such as lights, televisions etc., can be operated in a similar manner. Switching off the switch 19 can also illuminate a light 29 over the slot providing the receptionist with an instant display of room occupancy. A time-based override unit 20 can be provided to allow automatic airing of the rooms.

FIG. 1.

EP 0 085 796 A1

## Remote Control Apparatus

This invention relates to remote control apparatus and control modules for use in such apparatus, and is particularly, though not exclusively, applicable to apparatus for controlling central heating in large buildings.

In many large buildings, particularly in hotels, rooms are heated and/or lit, whether or not they are occupied. There is therefore a large amount of energy wasted. Normally each room has its own individual radiator or other heater, and if the heaters could be individually and remotely controlled a potential saving would be achieved. It is an object of the invention accordingly to provide a remote control system for a number of individual devices, such as heaters, which will detect when each device is required in use. One method of doing so is to detect when the respective room keys are handed into a central office on a room becoming vacant.

From one aspect this invention consists in a control apparatus for the remote control of a plurality of active device or apparatus, such as radiators, in separate rooms in response to the physical position of elements, such as room keys, associated with respective rooms, comprising a spearate element location corresponding to each room, each location having detecting means for detecting the presence or absence of an element and control means responsive to the detecting means for producing a control signal for changing the state of the active device in the room corresponding to the location, whenever the detecting means detects the presence or absence of the associated element.

For the purposes of this specification reference to "changing the state of active devices or apparatus" includes altering the output level of the active devices or apparatus, as well as switching the active device or apparatus on or off.

The control means may change the state of the active devices or apparatus whenever the detecting means detects a change in the presence or absence of the associated element. The detecting means may be or may include a mechanically, magnetically, electrically or optically operated switch and that switch may also constitute a part of the control means.

The control means may further include generating means for providing a unique control signal for each location and decoding means for changing the state of the respective active device or apparatus on receipt of the respective control signal. Preferably there is a decoding means for each room or group of rooms and the decoding means is connected to the generating means by a single signal path. The signal path may be constituted by at least part of a mains power ring, in which case the decoding means includes a ripple detector. Alternatively the generating means may generate binary signals, which can be multiplexed to the various decoding means. For small installations it may be economically desirable merely to connect the control means to each room or group of rooms by respective cables.

The element locations may be constituted by openings in a frame or body. These locations may be dimensioned such that they only receive that element, which is associated with the reception room to which they correspond, sufficiently to cause the detecting means to detect the presence of an element. The detecting means may be arranged to distinguish between unique indications on the elements. These indications may be: a profile on an edge and/or a surface of the body (such as slots and/or projection), a magnetic strip or strips disposed in a unique position on the element, a magnetic strip or portion bearing a unique code, or merely printed information such as the room number or description.

Alternatively the detecting means may be so disposed within an element location that it will only detect the presence or absence of that element to which the location corresponds.

The control means may further comprise override means for causing each active device or apparatus to be activated whatever the position of its respective element. The override means may be automatically operated by a clock or by environmental temperature detection means.

The apparatus may include means for placing any of the active devices in an intermediate state.

According to another aspect of the invention there is provided control equipment for controlling devices or apparatus in separate rooms, comprising an element for each room and control apparatus as hereinbefore defined.

Preferably each element bears a detectable indication representing its respective rooms and is bodily seperable from the control apparatus. For example, the element may be a key tab or fob and the indications may be constituted by magnetic strips or portions bearing unique coded signals, uniquely disposed magnetic strips, unique profile portions on the element or merely the room number or description.

The active devices or elements may include central heating or individual heating units, such as radiators or electric fires, lights, burglar alarms, telephone answering machines etc.

From another aspect the invention consists in control apparatus for the remote control of a plurality of devices, such as radiators, in separate rooms, comprising means, for each room, actuable in accordance with the

JWJ/BKCD/JCW                    -4-

occupancy of that room to change the state of an active device in the room and override means for changing the state of all the active devices controlled by the apparatus irrespective of the state of the actuable means.

From a further aspect the invention consists in an element for use with the control apparatus as hereinbefore defined, comprising a body bearing an indication representing a room.

The indication may be a profile on an edge and/or surface of the body, such as slots and/or projections, a magnetic strip or strips disposed in a unique position on the element, a magnetic strip or portion bearing a unique code, or merely printed information such as the room number or description.

For the purposes of this specification a unique indication, code or position is an indication, code or position, which is unique to the group of elements being used with a particular control apparatus.

From another aspect the invention consists in a room occupancy indicator for a hotel, comprising a body having a respective location for the key tab or fob of each bedroom of at least a plurality of bedrooms in the hotel, an indicator for each location and means for automatically switching an indicator on or off in accordance with the presence or absence of a key tab or fob in the location.

Preferably the indicator is a light.

The invention may be performed in a number of ways and one specific embodiment, with several possible modifications, will now be described, by way of example, with reference to the accompanying drawings, in which:

Figure 1 is a diagram illustrating a control system for a hotel heating circuit;

Figure 2 is a diagram of an electrical control circuit associated with the system; and

Figure 3 is a schematic sectional side view of a key slot, which forms part of the control system of figure 1.

Current hotel practice is to heat all hotel rooms whether or not they are let. This is extremely wasteful of energy, particularly as in many areas a greater percentage of hotel rooms are empty in the winter season. Hotel rooms all have keys, which are normally provided with large key tabs or fobs with the object of preventing people leaving the hotel without handing the key into "reception". When a key is handed into reception by a guest, who is checking-out, it is normally placed separately from the keys of let rooms so that the receptionist can see at a glance which rooms are available for occupation.

JWJ/BKCD/JCW                    -6-

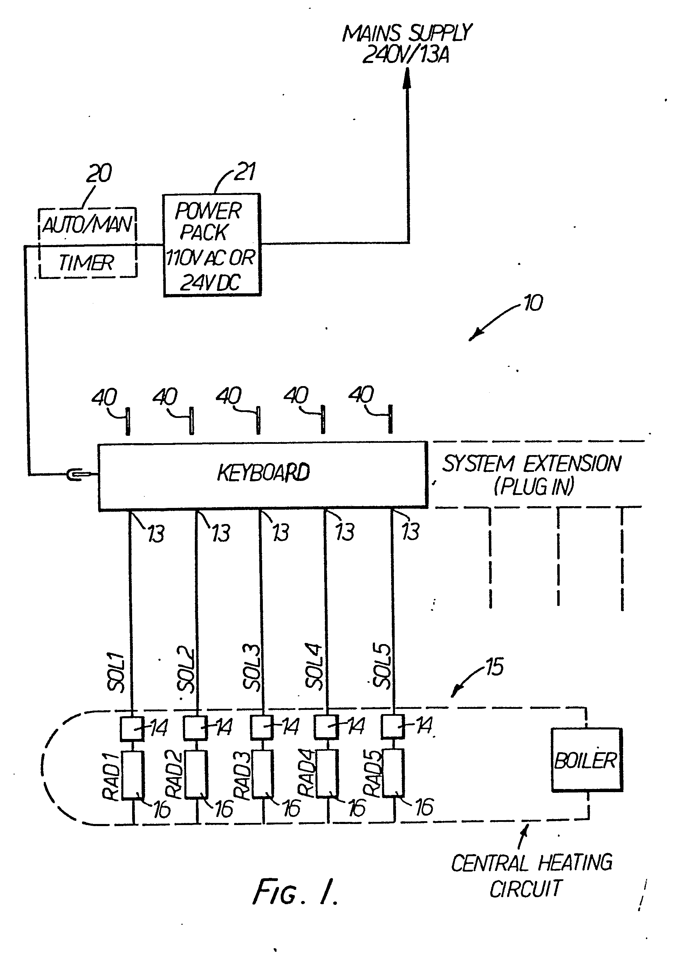

Figure 1 shows a control system whereby the heating in a hotel room is switched off whenever a guest checks out of a room and hands his key into reception.

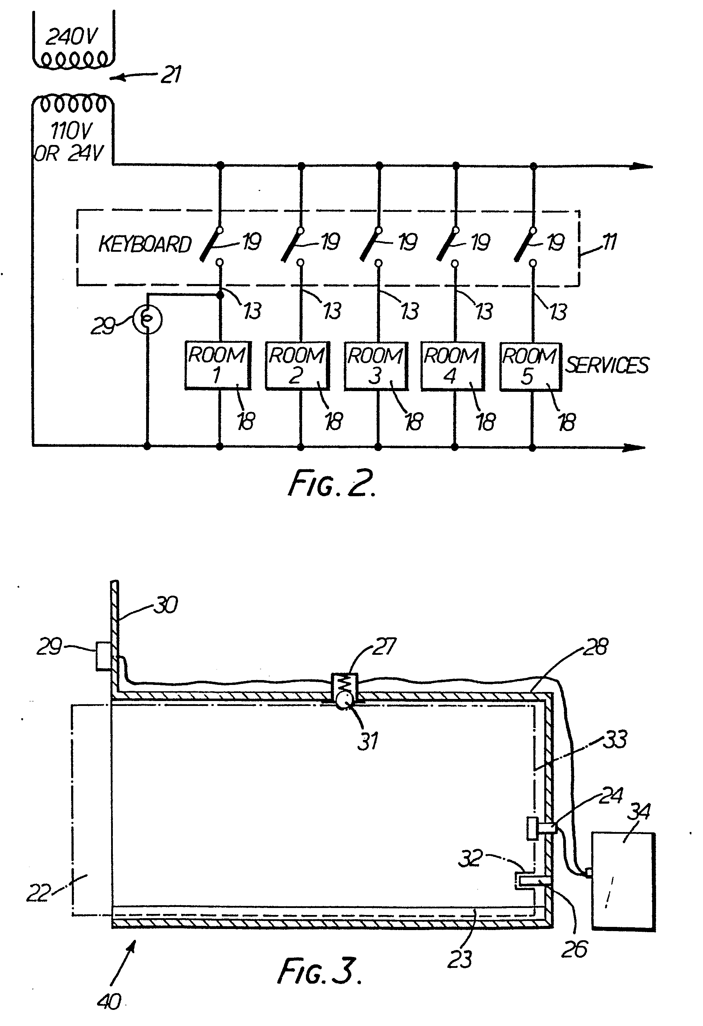

The system, generally indicated at 10, has a control module 11, which has a number of respective outputs 13, one for each of a plurality of solenoid valves 14. The solenoid valves 14 are disposed in a central heating circuit generally indicated at 15, and each arranged to control the operation of a respective on of the radiators 16. For the purposes of this description each radiator 16 is in a separate room 18 (see Figure 2), but it will be appreciated from the following description that an output 13 could be connected to a number of radiators in a single room.

Each solenoid valve 14 is arranged to shut off its respective radiator when there is a control signal on its associated output 13.

The control module 11 is in the form of a box and has a number of slots 40 arranged in a grid array in one face thereof. Each slot 40 corresponds to a particular room.

In use, therefore, on the receipt of a 'checked out' key the hotel receptionist inserts the key tabs in the correct slots in the control module 11. The insertion of a key tab in its correct slot causes an associated switch 19, disposed in the slot, to be turned on providing an

JWJ/BKCD/JCW                    -7-

output signal to its associated solenoid valve 14 causing the valve 14 to shut off the radiator 15 until the room is next let, when the key tab is removed from the control module 11.

From time to time it will be necessary to air rooms. This can be achieved by means of an override unit 20. The override unit 20 is arranged to provide .an actuating current on all outputs 13 whether or not a key tab is in the slot corresponding to each output.

The override unit 20 can either be manually operated or automatically controlled by a clock to provide periodic airing of the rooms. Additionally or alternatively the control module 11 may be arranged to switch off all power to the room, so that any lights or other electrical apparatus left by the guest is switched off. Similarly, in apartment blocks and offices telephone answering machines or burglar alarms could be switched on and off in accordance with the occupancy of any given apartment or office.

In many establishments electronic locks are now becoming more and more common. These are operated by plastics cards, which bear a magnetic code corresponding to the lock. It will be appreciated that such cards could be used to activate the control module 11, each slot 40 being provided with apparatus for reading the codes and discriminating between the codes.

The control signals may be either A.C. or D.C. signals, but it is preferred for fire safety reasons that low voltage D.C. signals are used. In hotels the use of such signals not only eases installations, as very thin cable may be used, but will allow the apparatus to be installed in a "do-it-yourself" basis without contravening existing safety legislation and standards. Typically the control module 11 will be operated from the mains supply by a transformer 21.

If it is subsequently desired to control more rooms another control module can be added to the system.

An indicator light 29 may be provided over each of the slots in the control module. Such lights will be arranged to be turned on whenever a key tab is present in their associated slot, so that the receiptionist can see at a glance if a room is available to let or is occupied.

It will be appreciated that is is important for the key tabs to be inserted in the correct slots. For many uses it is sufficient for the tabs and their associated slots to be numbered with the room numbers, but it may be desirable to ensure either that a tab cannot be inserted in an incorrect slot or that the switch 19 of a given slot will not be activated by an incorrect tab.

Thus each tab may be formed with slots on its leading edge, which slide past projections in the slot. Each slot has a different combination of projections and hence only the correct tab will be allowed to enter.

Alternatively, the switch may be magnetically activated, in which case each key tab may bear a uniquely positioned magnetic strip, which corresponds to the position of the switch in its slot and in no other slot. Thus the switch 19 in a given slot will only be activated when the correct key tab is inserted.

When a second control module is added the key tabs associated with the second control module may or may not correspond with those of the first control module.

Figure 3 is a schematic section and side view of a key slot 40, with a key tab 22 indicated in dotted line. The slot 40 is rectangular in section and has at least one runner 23 to guide the tab in and out of the slot. Switch 19 is constituted by a microswitch 24 mounted on the end wall 25 of the slot 40. An inwardly extending pin 26 is also mounted on this wall at a position, which is unique to the slot. A ball catch 27, such as a standard door catch, is mounted in the upper wall 28 of the slot. An indicator light 29 is mounted on the face panel 30. Both the light 29 and microswitch 24 are connected in circuit as previously described, the circuit being shown diagrammatically at 34.

Each key tab is formed with a slot in its upper edge in which the ball 31 of catch 27 can positively engage and with a hole 32 in its leading edge 33, which receives pin 26 of the slot to which it corresponds.

JWJ/BKCD/JCW                     .-10-

0085796

In use, the key tab 22 is inserted in its slot. The leading edge 33 depresses microswitch 24 to close it and hence switches the controlled device and causes light 29 to be illuminated. The ball catch holds the key tab 22 in the slot against the microswitch spring (not shown). If the wrong key tab is inserted in the slot its hole 32 will be out of position in relation to pin 26 and the leading edge 33 will be prevented from depressing the microswitch 24 by pin 26. Preferably the ball catch is located such that it brakes the longitudinal motion of the key tab, thus protecting the microswitch.

In many uses it may be desirable to keep the installation time to a minimum. In such cases the control module 11 may have a single output 13, which is connected to a series of decoding units. The closure of each switch causes a binary signal, which is unique to that switch, to be fed from output 13 to the decoding unit. The decoding units are arranged to control the radiators in a number of rooms, conveniently four. When a decoding unit detects a coded signal corresponding to one of its rooms it operates the correct solenoid valve 14 and turns the radiator off. When the tab is removed, the signal ceases and the radiator is turned on.

In an alternative arrangement, the closure of a switch 19 may cause a unique ripple signal to be created

JWJ/BKCD/JCW                    -11-

on the mains power ring of the hotel. Ripple detectors, set to detect their particular signal are then provided in each room to operate the radiator 15 in that room.

Many hotels have a fairly constant passing trade. It is therefore clearly desirable to keep a number of rooms at least partially heated, so that they are ready to receive such guests. In such cases a further switch may be provided, on the control module for at least a number of rooms. When the current occupant of a room books out and the key tab is inserted in the slot, the respective further switch is closed. Closure of this further switch causes the room either to be heated intermittently or at a lower level. This can be achieved by providing a time base relay, in the decoding units, to operate the solenoid valves 14.

Often a hotelier will know from experience that if a room is not occupied by a certain time, say 19.00, then it is unlikely to be let. In such cases the clock 20 can be arranged to open all the further switches at that time to stop the intermediate heating.

## CLAIMS

1. A control apparatus for the remote control of a plurality of active devices or apparatus in separate rooms in response to the physical position of elements associated with respective rooms, comprising a separate element location corresponding to each room, each location having detecting means for detecting the presence or absence of an element and control means responsive to the detecting means for producing a control signal for changing the state of the active device in the room corresponding to the location, whenever the detecting means detects the presence or absence of the associated element.

2. Apparatus as claimed in claim 1, wherein the control means changes the state of the active device or apparatus whenever the detecting means detects a change in the presence or absence of the associated element.

3. Apparatus as claimed in claim 1 or claim 2, wherein the detecting means is or includes a mechanically, magnetically, electrically or optically operated switch.

4. Apparatus as claimed in claim 3, wherein the switch also consitutes part of the control means.

5. Apparatus as claimed in any one of the preceding claims, wherein the control means includes generating means for providing a unique control signal for each location and decoding means for changing the state of the respective active device or apparatus on receipt of the respective control signal.

6. Apparatus as claimed in claim 5, wherein there is a decoding means for each room or group of rooms and the decoding means are connected to the generating means by a single signal path.

7. Apparatus as claimed in claim 6, wherein the signal path is at least part of a mains power ring and wherein the decoding means includes a ripple detector.

8. Apparatus as claimed in claim 6, wherein the generating means generates binary signals.

9. Apparatus as claimed in claims 1 to 4, wherein the control means is connected to each room or group of rooms by a respective cable.

10. Apparatus as claimed in any one of the preceding claims, wherein the element locations are constituted by openings in a frame or body.

11. Apparatus as claimed in claim 10, wherein the locations are dimensioned such that they only receive that element, which is associated with the respective room to which they correspond, sufficiently to cause the detecting means to detect the presence of an element.

12. Apparatus as claimed in claim 10 or claim 11, wherein the detecting means are arranged to distinguish between unique indications on the elements.

-3-

0085796

13. Apparatus as claimed in claim 10 or 11, wherein the detecting means are disposed in a location such that they detect only the presence or absence of that element to which the location corresponds.

14. Apparatus as claimed in any one of the preceding claims, wherein the control means further comprises override means for causing each active device or apparatus to be activated whatever the position of its respective element.

15. Apparatus as claimed in claim 14, wherein the override means are automatically operated by a clock or by environmental temperature detection means.

16. Apparatus as claimed in any one of the preceding claims, including means for placing any of the active devices in an intermediate state.

17. Control equipment for remote controlling active devices or apparatus in separate rooms comprising an element for each room and control apparatus as claimed in any one of the preceding claims.

18. Equipment as claimed in claim 17, wherein each element bears a detectable indication representing its respective room and is bodily separable from the control apparatus.

19. Equipment as claimed in claim 18, wherein the element is a key tab or fob.

20. Control apparatus for the remote control of a plurality of devices in separate rooms comprising, means for each room, actuable in accordance with occupancy of that

JWJ/BKCD/JCW                    -3-

room to change the state of an active device in the room and override means for changing the state of all the active devices controlled by the apparatus irrespective of the state of the actuable means.

21. An element for use with control apparatus as claimed in any one of claims 1 to 16, comprising a body bearing an indication representing a room.

22. A room occupancy indicator for a hotel, comprising a body having a respective location for the key tab or fob of at least a plurality of bedrooms in the hotel, an indicator for each location and means for automatically switching the indicator on or off in accordance with the presence or absence of the key tab or fob in the location.

FIG. 1.

0085796

FIG. 2.

FIG. 3.

## DOCUMENTS CONSIDERED TO BE RELEVANT

| Category | Citation of document with indication where appropriate, of relevant passages | Relevant to claim | CLASSIFICATION OF THE APPLICATION (Int. Cl. ³) |
|---|---|---|---|
| | --- | | G 05 D 23/19 |
| E | GB-A-2 082 352 (GRANVILLE TIN PLATE)<br><br>* page 1, lines 49-75; page 1, line 87 - page 2, line 9; page 2, lines 56-129; figures 1,2,3; page 3, lines 96-104; figures 1,2,3,4; page 4, lines 25-37; figure 5; page 4, lines 64-86; figure 5 * | 1-6,8, 14,15, 16,17, 18,20, 21,22 | |
| | --- | | |
| A | US-A-4 232 819 (SENTRY CONTROLS)<br>* column 3, line 1 - column 4, line 3; figures 1,2,3; column 5, lines 25-40; figures 1-5 * | 1-3,10 ,11 | |
| | --- | | TECHNICAL FIELDS SEARCHED (Int. Cl. ³) |
| A | US-A-4 107 466 (LETOT)<br>* abstract * | 1 | G 05 D |
| | --- | | |
| A | FR-A-2 357 017 (R.L. FICHTNER)<br>* page 2, lines 7-18; page 3, line 35 - page 4, line 23 * & US - A - 4 150 415 | 1 | |
| | --- | | |
| A | GB-A-2 039 402 (ROBERT SHAW)<br>* page 1, line 1 - page 2, line 20; page 3, lines 43-63 * | 1 | |
| | ----- | | |

The present search report has been drawn up for all claims

| Place of search | Date of completion of the search | Examiner |
|---|---|---|
| THE HAGUE | 06-10-1982 | HOUILLON J.C.P.L. |